# EUROPEAN PATENT APPLICATION

(11) **EP 4 729 478 A1**
(43) Date of publication of application: **22.04.2026**
(21) Application number: 24857780.1
(22) Date of filing: 10.04.2024
(51) Int. Cl.: C01B 32/05, H01M 4/62, H01M 4/36, H01M 4/38, H01M 4/485

(54) **CARBON MATERIAL, NEGATIVE ELECTRODE MATERIAL AND BATTERY**

(30) Priority: 30.08.2023 CN 202311109379
(71) Applicant: BTR New Material Group Co., Ltd., Shenzhen, Guangdong 518106 (CN)
(72) Inventor: LIU, Zhangkun, Shenzhen, Guangdong 518106 (CN); HE, Peng, Shenzhen, Guangdong 518106 (CN); XIAO, Chengmao, Shenzhen, Guangdong 518106 (CN); REN, Jianguo, Shenzhen, Guangdong 518106 (CN); HE, Xueqin, Shenzhen, Guangdong 518106 (CN)
(74) Representative: Novagraaf Technologies
(86) International application number: PCT/CN2024/086963
(87) International publication number: WO 2025/044230

(57) **Abstract**

Provided is carbon material, anode material, and battery. The carbon material has pores, and a length-diameter ratio of particles of the carbon material is 3-15. The particles of the carbon material of the present disclosure have a rod-shaped structure, and the rod-shaped particles of the carbon material may be arranged and stacked together to reduce gaps among the particles of the carbon material and improve the compaction density of the carbon material, thereby improving the surface capacity density of a carbon material electrode sheet.

## Description

This application claims priority to Chinese Patent Application No. 202311109379.5, filed to the China National Intellectual Property Administration on August 30, 2023 and entitled "Carbon Material and Preparation Method Therefor, anode Material, and Battery", the disclosure of which is hereby incorporated by reference in its entirety.

### Technical Field

The present disclosure relates to the technical field of anode materials, and specifically, to carbon material, anode material, and battery.

### Background

Porous carbon anode materials are recognized as one of the most critical materials for improving the cycling expansion performance of lithium-ion batteries. Cavity or pore structures inside commonly used porous carbon anode materials are mostly mesopore or macropore structures, and such a pore structure often leads to low efficiency and potential safety hazards when the porous carbon anode materials are compounded with active substances such as silicon, tin, lead, or sulfur. During the compounding of the porous carbon anode material and the active substance, it is difficult for the active substance to completely fill macropores and mesopores in the porous carbon anode material, and it is difficult for the active substance to achieve uniform distribution in the pore structures of porous carbon, which on the one hand leads to limited improvement in compaction density and energy density of a composite, and on the other hand leads to non-uniform distribution of expansion tension of the composite during cycling, resulting in fracture and pulverization of the composite, thereby posing potential safety hazards. At the same time, there are numerous pore structures among particles of the porous carbon anode material. These pore structures may deteriorate the mechanical properties of the material, leading to fracture under stress during compaction and electrode sheet fabrication, and further reducing the coulombic efficiency of the material.

Therefore, how to reduce the numerous pore structures among the particles of the porous carbon anode material, improve the mechanical properties and energy density of the anode material, and reduce the fracture of the particles during electrode sheet compaction is the problem urgently to be solved currently.

### Summary

The present disclosure provides carbon material, anode material, and battery. An average length-diameter ratio of particles of the carbon material of the present disclosure is 3-15, the particles of the carbon material have a rod-shaped structure, and the rod-shaped particles of the carbon material are arranged and stacked together to reduce gaps among the particles of the carbon material and improve the compaction density of the carbon material, thereby improving the surface capacity density and mechanical properties of a carbon material electrode sheet.

In first aspect, the present disclosure provides a carbon material. The carbon material has pores, and an average length-diameter ratio of particles of the carbon material is 3-15.

In some implementations, an average length of the particles of the carbon material is 0.3 µm-5 µm.

In some implementations, an average diameter of the particles of the carbon material is 0.1 µm-3 µm.

In some implementations, a total pore volume of the carbon material is 0.2 cm³/g-0.8 cm³/g.

In some implementations, an average pore size of the pores in the carbon material is 0.8 nm-2.5 nm.

In some implementations, the pores in the carbon material include micropores. A volume proportion of the micropores in the total pore volume is 80%-95%.

In some implementations, the pores in the carbon material further include at least one of mesopores or macropores.

In some implementations, a volume proportion of the mesopores in the total pore volume is 5%-15%.

In some implementations, a volume proportion of the macropores in the total pore volume is 0%-5%.

In some implementations, a charging capacity of a battery assembled from the carbon material is 250 mAh/g-400 mAh/g.

In some implementations, coulombic efficiency of the battery assembled from the carbon materials is 40%-55%.

In some implementations, a mass content of oxygen in the carbon material is 1%-5.5%.

In second aspect, the present disclosure provides an anode material. The anode material includes the carbon material as described in the first aspect and an active substance. At least partial active substance is filled in pores of the carbon material.

In third aspect, the present disclosure provides an anode material. The anode material includes a carbon material and an active substance. The anode material with the active substance removed has pores, and an average length-diameter ratio of particles of the anode material with the active substance removed is 3-15.

In some implementations, a mass content of carbon in the negative cathode material is 70%-98%.

In some implementations, the active substance includes silicon-based active particles.

In some implementations, the active substance includes silicon-based active particles. The silicon-based active particles include at least one of amorphous silicon, crystalline silicon, silicon oxide, silicon alloy, or a complex of crystalline silicon and amorphous silicon.

In some implementations, the active substance includes silicon-based active particles. A median particle size of the silicon-based active particles is 0.85 nm-2.45 nm.

In some implementations, a pore volume of the anode material is 0.001 cm³/g-0.020 cm³/g.

In fourth aspect, the present disclosure provides a battery. The battery includes the carbon material as described in the first aspect or the anode material as described in the second aspect or the third aspect.

Compared with the related art, the technical solutions of the present disclosure have at least the following beneficial effects.

According to the carbon material provided by the present disclosure, the average length-diameter ratio of the particles of the carbon material is 3-15, the particles of the carbon material have the rod-shaped structure, and the rod-shaped particles of the carbon material are arranged and stacked together to reduce the gaps among the particles of the carbon material, reduce pore structures in the carbon material after the particles of the carbon material are stacked, and improve the compaction density and mechanical properties of the carbon material, thereby improving the surface capacity density and mechanical properties of the carbon material electrode sheet. The carbon material may reduce the probability of fracture of the carbon material caused by rolling extrusion among the particles during rolling preparation of an anode sheet, thereby facilitating improvement in the mechanical properties of the carbon material anode sheet. Controlling the length-diameter ratio of the particles of the carbon material facilitates a continuous axial electron transport path and a shorter radial ion diffusion path, thereby significantly improving the rate performance of a battery using the carbon material.

### Brief Description of the Drawings

The present disclosure is further described below with reference to the drawings and embodiments.
Fig. 1 is a schematic structural diagram of a carbon material according to an embodiment of the present disclosure.
Fig. 2 is a flowchart of a preparation process of a carbon material according to an embodiment of the present disclosure.
Fig. 3 is a scanning electron micrograph of a carbon material according to Embodiment 1 of the present disclosure.
Fig. 4 is a scanning electron micrograph of a carbon material according to Embodiment 2 of the present disclosure.
Fig. 5 is a scanning electron micrograph of a carbon material according to Comparative embodiment 1 of the present disclosure.
Fig. 6 is a scanning electron micrograph of a carbon material according to Comparative embodiment 2 of the present disclosure.
Fig. 7 is a pore size distribution diagram of a carbon material according to Embodiment 1 of the present disclosure.
Fig. 8 is a pore size distribution diagram of a carbon material according to Embodiment 2 of the present disclosure.
Fig. 9 is a pore size distribution diagram of a carbon material according to Comparative embodiment 1 of the present disclosure.
Fig. 10 is a pore size distribution diagram of a carbon material according to Comparative embodiment 2 of the present disclosure.

### Detailed Description of the Embodiments

In order to better understand the technical solutions of the present disclosure, the embodiments of the present disclosure are described in detail below with reference to the drawings.

It is to be clear that the described embodiments are only part of the embodiments of the present disclosure, not all the embodiments. All other embodiments obtained by those of ordinary skill in the art on the basis of the embodiments of the present disclosure without creative work fall within the scope of protection of the present disclosure.

The terms used in the embodiments of the present disclosure are only for describing specific embodiments and are not intended to limit the present disclosure. Singular forms "a/an", "said", and "the" used in the embodiments and appended claims of the present disclosure are also intended to include plural forms unless other meanings are clearly expressed in the context.

It is to be understood that, the term "and/or" used here is merely an association relationship describing related objects, which means that there may be three relationships, for example, A and/or B may indicate three cases: A exists alone, A and B exist simultaneously, and B exists alone. In addition, the character "/" in this paper generally indicates that the related objects are in an "or" relationship.

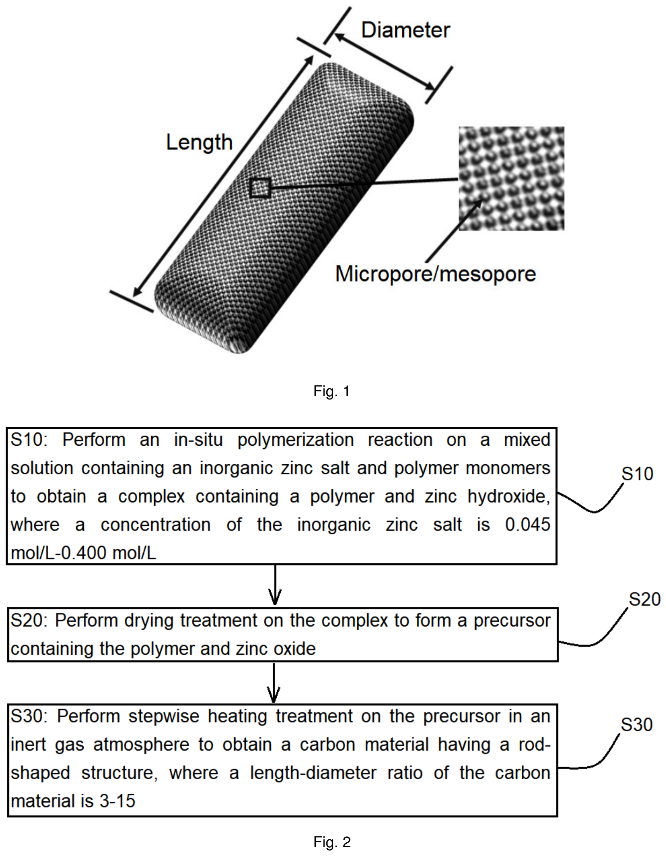

In first aspect, as shown in Fig. 1, the present disclosure provides a carbon material. Particles of the carbon material have a rod-shaped structure, the carbon material has pores, and an average length-diameter ratio of the particles of the carbon material is 3-15.

According to the carbon material provided by the present disclosure, the average length-diameter ratio of the particles of the carbon material is 3-15, the particles of the carbon material have a rod-shaped structure, and the rod-shaped particles of the carbon material are arranged and stacked together to reduce gaps among the particles of the carbon material, reduce pore structures in the carbon material after the particles of the carbon material are stacked, and improve the compaction density and mechanical properties of the carbon material, thereby improving the surface capacity density and mechanical properties of a carbon material electrode sheet. The carbon material may reduce the probability of fracture of the carbon material caused by rolling extrusion among the particles during rolling preparation of an anode sheet, thereby facilitating improvement in the mechanical properties of the carbon material anode sheet. Controlling the length-diameter ratio of the particles of the carbon material facilitates a continuous axial electron transport path and a shorter radial ion diffusion path, thereby significantly improving the rate performance of a battery using the carbon material. An axial direction refers to a length direction of the carbon material, and a radial direction refers to a diameter direction of the carbon material.

Specifically, the average length-diameter ratio of the particles of the carbon material may be 3, 4, 5, 6, 7, 8, 9, 10, 11, 12, 13, 14, 15, or the like, which is not limited herein. Preferably, the average length-diameter ratio of the carbon material is 5-10.

In some implementations, an average length of the particles of the carbon material is 0.3 µm-5 µm, which may specifically be 0.3 µm, 0.5 µm, 1 µm, 1.5 µm, 2 µm, 2.5 µm, 3 µm, 3.5 µm, 4 µm, 4.5 µm, 5 µm, or the like, or may definitely be other values within the above range, and is not limited herein. Preferably, the average length of the carbon material is 1 µm-3 µm.

In some implementations, an average diameter of the particles of the carbon material is 0.1 µm-3 µm, which may specifically be 0.1 µm, 0.2 µm, 0.3 µm, 0.4 µm, 0.5 µm, 1 µm, 1.5 µm, 2 µm, 2.5 µm, 3 µm, or the like, or may definitely be other values within the above range, and is not limited herein. Preferably, the average diameter of the carbon material is 0.3 µm-0.5 µm.

In some implementations, a total pore volume of the carbon material is 0.2 cm³/g-0.8 cm³/g, which may specifically be 0.2 cm³/g, 0.3 cm³/g, 0.4 cm³/g, 0.5 cm³/g, 0.6 cm³/g, 0.7 cm³/g, 0.8 cm³/g, or the like, and is not limited herein. Preferably, the total pore volume of the carbon material is 0.5 cm³/g-0.8 cm³/g.

In some implementations, a specific surface area of the carbon material is 500 m²/g-1600 m²/g, which may specifically be 500 m²/g, 600 m²/g, 700 m²/g, 800 m²/g, 900 m²/g, 1000 m²/g, 1100 m²/g, 1200 m²/g, 1300 m²/g, 1400 m²/g, 1500 m²/g, 1600 m²/g, or the like, or may definitely be other values within the above range, and is not limited herein. Preferably, the specific surface area of the carbon material is 600 m²/g-900 m²/g.

In some implementations, an average pore size of the pores in the carbon material is 0.8 nm-2.5 nm, which may specifically be 0.8 nm, 0.9 nm, 1 nm, 1.1 nm, 1.3 nm, 1.5 nm, 1.6 nm, 1.8 nm, 2 nm, 2.3 nm, 2.5 nm, or the like, or may definitely be other values within the above range, and is not limited herein. Preferably, the average pore size of the carbon material is 1 nm-1.5 nm.

In some implementations, the pores in the carbon material include micropores. A volume proportion of the micropores in the total pore volume is 80%-95%, which may specifically be 80%, 81%, 83%, 85%, 87%, 90%, 91%, 92%, 93%, 94%, 95%, or the like, or may definitely be other values within the above range, and is not limited herein.

It is understandable that, the carbon material has a large number of micropore structures, and during the compounding with an active substance, the advantages of chemical vapor infiltration of the micropores can be effectively utilized, which facilitates uniform and efficient distribution of the active substance in the pores in the carbon material during the compounding, facilitates uniform dispersion of the expansion tension of the active substance, reduces fracture and pulverization of the anode material, and facilitates improvement in the compaction density and energy density of the anode material. By controlling the volume proportion of the micropores in the carbon material within the above range, the compounding uniformity of the carbon material and the active substance is improved, so that the active substance can be uniformly distributed in the pore structures of the carbon material during the compounding, thereby improving the distribution uniformity of expansion tension during cycling of the anode material, reducing the fracture and pulverization of the anode material, and reducing potential safety hazards of the anode material. At the same time, the micropore structures of the carbon material may be filled with the active substance as completely as possible, which facilitates improvement in the compaction density and energy density of the anode material. Preferably, the volume proportion of the micropores in the carbon material in the total pore volume is 90%-95%.

In some implementations, the pores in the carbon material further include mesopores. A volume proportion of the mesopores in the total pore volume is 5%-15%, which may specifically be 5%, 6%, 7%, 8%, 9%, 10%, 11%, 12%, 13%, 14%, 15%, or the like, or may definitely be other values within the above range, and is not limited herein. Preferably, the volume proportion of the mesopores in the carbon material in the total pore volume is 5%-10%.

In some implementations, the pores in the carbon material further include macropores. A volume proportion of the macropores in the total pore volume is 0%-5%, which may specifically be 0%, 0.5%, 1%, 1%, 3%, 4%, 5%, or the like, or may definitely be other values within the above range, and is not limited herein. Preferably, the volume proportion of the micropores in the carbon material in the total pore volume is 0%-1%.

In some implementations, the carbon material contains oxygen, and a mass content of oxygen in the carbon material is 1%-5.5%, which may specifically be 1%, 1.2%, 1.5%, 1.8%, 2%, 2.4%, 2.6%, 2.9%, 3%, 3.5%, 4%, 4.5%, 5%, 5.1%, 5.2%, 5.3%, 5.5%, or the like, or may definitely be other values within the above range, and is not limited herein. Controlling the mass content of oxygen in the carbon material within the above range facilitates improvement in the conductivity of the carbon material. Preferably, the mass content of oxygen in the carbon material is 1%-4.2%.

In some implementations, a charging capacity of the carbon material is 250 mAh/g-400 mAh/g, which may specifically be 250 mAh/g, 260 mAh/g, 280 mAh/g, 300 mAh/g, 320 mAh/g, 330 mAh/g, 350 mAh/g, 360 mAh/g, 370 mAh/g, 380 mAh/g, 390 mAh/g, 400 mAh/g, or the like, and is not limited herein. Preferably, the charging capacity of the carbon material is 320 mAh/g-390 mAh/g.

In some implementations, coulombic efficiency of the carbon material is 40%-55%, which may specifically be 40%, 43%, 45%, 48%, 50%, 51%, 52%, 53%, 54%, 55%, or the like, or may definitely be other values within the above range, and is not limited herein. Preferably, the coulombic efficiency of the carbon material is 48%-55%.

In second aspect, the present disclosure provides an anode material. The anode material includes the carbon material as described in the first aspect and an active substance. At least partial active substance is filled in pores of the carbon material.

In third aspect, the present disclosure provides an anode material. The anode material includes a carbon material and an active substance. The anode material after removing the active substance has pores, and an average length-diameter ratio of particles of the anode material with the active substance removed is 3-15.

The active substance is removed by etching. Exemplarily, when the active substance is silicon-based active particles, the anode material is added to a nitric acid solution with a concentration of 1 M for soaking for 4 h; then, an HF acid solution with a 20% mass fraction is added dropwise to the anode material, yellow smoke is produced, and the acid solution is repeated added dropwise for a plurality of times, until there no yellow smoke produced in the solution; and finally, the nitric acid solution with the concentration of 1 M is used again to eliminate residue, and then washing and drying are performed to obtain the anode material with the active substance removed.

In some implementations, the average length-diameter ratio of the particles of the anode material with the active substance removed is 3-15, which may specifically be 3, 4, 5, 6, 7, 8, 9, 10, 11, 12, 13, 14, 15, or the like, or may definitely be other values within the above range, and is not limited herein.

In some implementations, the active substance refers to a substance that may react with lithium to perform lithium deintercalation. Specifically, the active substance includes at least one of Li, Na, K, Sn, Ge, Si, Fe, SiO, Mg, Ti, Zn, Al, P, or Cu. The active substance may be a metallic element.

In some implementations, the active substance may specifically be Si particles, Sn particles, Ge particles, or Al particles. In some other embodiments, the active substance may also be silicon-lithium alloy, silicon-magnesium alloy, or the like. Of course, it is to be noted that, in some cases, the active substance includes elemental particles and alloy.

In some implementations, a mass content of carbon in the anode material is 70%-98%, which may specifically be 70%, 75%, 80%, 85%, 90%, 92%, 95%, 96%, 97%, 98%, or the like, or may definitely be other values within the above range, and is not limited herein.

In some implementations, the active substance includes silicon-based active particles.

In some implementations, the silicon-based active particles include at least one of amorphous silicon, crystalline silicon, silicon oxide, silicon alloy, or a complex of crystalline silicon and amorphous silicon.

In some implementations, an average particle size of the silicon-based active particles is 0.85 nm-2.45 nm, which may specifically be 0.85 nm, 0.9 nm, 0.95 nm, 1 nm, 1.2 nm, 1.5 nm, 1.8 nm, 2.0 nm, 2.1 nm, 2.2 nm, 2.3 nm, 2.4 nm, 2.45 nm, or the like, or may definitely be other values within the above range, and is not limited herein.

In some implementations, the specific surface area of the anode material is 0.5 m²/g-5m²/g, which may specifically be 0.5 m²/g, 1 m²/g, 1.5 m²/g, 2 m²/g, 2.5 m²/g, 3 m²/g, 3.5 m²/g, 4 m²/g, 4.5 m²/g, 5 m²/g, or the like, or may definitely be other values within the above range, and is not limited herein.

In some implementations, a pore volume of the anode material is 0.001 cm³/g-0.020 cm³/g, which may specifically be 0.001 cm³/g, 0.005 cm³/g, 0.01 cm³/g, 0.015 cm³/g, 0.02 cm³/g, or the like, or may definitely be other values within the above range, and is not limited herein.

In some implementations, the compaction density of the anode material is 0.90 g/cm³-1.10 g/cm³, which may specifically be 0.9 g/cm³, 0.92 g/cm³, 0.95 g/cm³, 0.98 g/cm³, 1 g/cm³, 1.1 g/cm³, or the like, or may definitely be other values within the above range, and is not limited herein.

In a fourth aspect, the present disclosure provides a preparation method for a carbon material, as shown in Fig. 2, including the following steps.

At S10, an in-situ polymerization reaction and a co-precipitation reaction are performed on a mixed solution containing an inorganic zinc salt and polymer monomers to obtain a complex containing a polymer and zinc hydroxide, where a concentration of the inorganic zinc salt is 0.045 mol/L-0.400 mol/L.

At S20, drying treatment is performed on the complex to form a precursor containing the polymer and zinc oxide.

At S30, stepwise heating treatment is performed on the precursor in an inert gas atmosphere to obtain a carbon material having a rod-shaped structure. An average length-diameter ratio of the carbon material is 3-15.

According to the preparation method for the carbon material provided by the present disclosure, by performing the in-situ polymerization reaction on the mixed solution containing the inorganic zinc salt and the polymer monomers, during the in-situ polymerization, the inorganic zinc salt in the solution precipitates to form zinc hydroxide, while the polymer monomers polymerize to form the polymer, and the polymer and zinc hydroxide co-precipitate to produce the complex containing the polymer and zinc hydroxide through co-precipitation. In addition, the length-diameter ratio of the carbon material is controlled by controlling the concentration of the inorganic zinc salt in the mixed solution, thereby controlling the carbon material to have the rod-shaped structure. The drying treatment is performed on the complex, and during the drying treatment, the zinc oxide having the rod-shaped structure is formed by decomposing zinc hydroxide, while polymer particles are stacked and arranged using the zinc oxide as a template to form the rod-shaped precursor containing the polymer and the zinc oxide. The stepwise heating treatment is performed on the precursor in the inert gas atmosphere, and during the heat treatment, initial solidification may be performed on the structure of the rod-shaped precursor to reduce the damage to the rod-shaped structure caused by rapid heating, and then carbonization treatment is performed after heating, so that the polymer in the precursor is cracked to form the carbon material containing the zinc oxide during the high-temperature carbonization, then the zinc oxide is reduced to elemental zinc by partial carbon in the carbon material, and finally, zinc is vaporized at high temperature and released from the interior of the carbon material. Zinc vapor can act as a pore forming agent, so that uniform pores are formed in the carbon material, which extend from the interior to a surface of the carbon material, thereby forming the carbon material having the rod-shaped structure with the pores.

The preparation method of the present disclosure is described in detail below with reference to the embodiments.

At S10, the in-situ polymerization reaction is performed on the mixed solution containing the inorganic zinc salt and the polymer monomers to obtain the complex containing the polymer and zinc hydroxide, where the concentration of the inorganic zinc salt is 0.045 mol/L-0.400 mol/L.

In S10, the concentration of the inorganic zinc salt may specifically be 0.045 mol/L, 0.048 mol/L, 0.05 mol/L, 0.10 mol/L, 0.20 mol/L, 0.24 mol/L, 0.30 mol/L, 0.35 mol/L, 0.40 mol/L, or the like, but is not limited to the numerical values listed, and other numerical values within the numerical range are also applicable. When the concentration of the inorganic zinc salt in the mixed solution is too high, the longitudinal growth of the zinc oxide having the rod-shaped structure begins to be suppressed by a shear force generated during stirring, the lateral growth of the zinc oxide becomes dominant, the length-diameter ratio decreases, and the particles begin to agglomerate, resulting in the disappearance of the rod-shaped structure, thereby failing to form the carbon material having the rod-shaped structure. Controlling the concentration of the inorganic zinc salt in the mixed solution within the above range facilitates the control of the length-diameter ratio of the carbon material, and the formation of the rod-shaped structure of the carbon material is facilitated.

In some implementations, the inorganic zinc salt includes at least one of zinc chloride, zinc nitrate, zinc acetate, zinc sulfate, zinc fluorosilicate, zinc fluoroborate, or zinc gluconate. It is understandable that, during the formation of the carbon material, the inorganic zinc salt may form the zinc oxide having the rod-shaped structure, and the rod-shaped structure of the zinc oxide faciliates the formation of the rod-shaped structure of the carbon material.

In some implementations, the polymeric monomers include a first monomer and a second monomer.

In some implementations, the polymeric monomers include a first monomer. The first monomer includes phenol and derivatives thereof, melamine and derivatives thereof, or benzoic acid and derivatives thereof.

In some implementations, the polymeric monomers include a first monomer. The first monomer includes at least one of phenol, resorcinol, catechol, hydroquinone, phloroglucinol, p-aminophenol, or dopamine.

In some implementations, the polymeric monomers include a first monomer. The first monomer includes at least one of melamine, benzoguanamine, trichloromelamine, or hexamethylolmelamine.

In some implementations, the polymer monomers include a first monomer. The first monomer includes at least one of benzoic acid, p-toluic acid, p-fluorobenzoic acid, or 3-chlorobenzoic acid.

In some implementations, the polymer monomers include a second monomer. The second monomer includes at least one of formaldehyde, furfural, acetaldehyde, propionaldehyde, or butyraldehyde.

In some implementations, the mixed solution further includes a surfactant. The surfactant includes at least one of cetyltrimethylammonium bromide, sodium dodecylbenzenesulfonate, sodium carboxymethyl cellulose, or polyvinylpyrrolidone.

It is understandable that, the addition of the surfactant to the mixed solution can enhance the adsorption effect of zinc hydroxide on the polymer particles, thereby improving the co-precipitation efficiency of the polymer and zinc hydroxide.

In some implementations, the mixed solution further includes a surfactant. A concentration of the surfactant is 0.10 mol/L-0.15 mol/L, which may specifically be 0.1 mol/L, 0.11 mol/L, 0.12 mol/L, 0.13 mol/L, 0.14 mol/L, 0.15 mol/L, or the like, or may definitely be other values within the above range, and is not limited herein.

In some implementations, the mixed solution further includes a pH regulator. The pH regulator includes at least one of ammonia water, sodium hydroxide, or potassium hydroxide.

In some implementations, a pH value of the mixed solution is 10-14, which may specifically be 10, 10.5, 11, 11.5, 12, 12.5, 13, 13.5, 14, or the like, and is not limited herein.

In some implementations, a reaction temperature of the in-situ polymerization reaction is 28 °C-50 °C, which may specifically be 28 °C, 30 °C, 35 °C, 40 °C, 43 °C, 45 °C, 46 °C, 48 °C, 50 °C, or the like, and is not limited herein.

In some implementations, reaction time for the in-situ polymerization is 4 h-12 h, which may specifically be 4 h, 5 h, 6 h, 7 h, 8 h, 9 h, 10 h, 11 h, 12 h, or the like, or may definitely be other values within the above range, and is not limited herein.

In some implementations, the in-situ polymerization reaction is performed in a stirring state, and a stirring rate is controlled at 100 r/min-1500 r/min, which may specifically be 100 r/min, 200 r/min, 300 r/min, 400 r/min, 500 r/min, 800 r/min, 1000 r/min, 1200 r/min, 1300 r/min, 1500 r/min, or the like, but is not limited to the numerical values listed, and other numerical values within the numerical range are also applicable.

In some implementations, the specific steps of performing the in-situ polymerization reaction on the mixed solution containing the inorganic zinc salt and the polymer monomers to obtain the complex containing the polymer and zinc hydroxide are as follows.

The polymer monomers, the inorganic zinc salt, the surfactant, and ammonia water are added to a solvent and mixed to obtain the mixed solution containing the inorganic zinc salt and the polymer monomers.

The in-situ polymerization reaction and the co-precipitation reaction are performed on the mixed solution, and solid-liquid separation is performed to obtain the complex containing the polymer and zinc hydroxide.

In some implementations, the solvent includes at least one of water, ethanol, methanol, or propanol.

In some implementations, the solid-liquid separation includes at least one of filtration separation or centrifugal separation.

At S20, drying treatment is performed on the complex to form the precursor containing the polymer and zinc oxide.

In some implementations, a temperature for the drying treatment is 60 °C-90 °C, which may specifically be 60 °C, 65 °C, 70 °C, 75 °C, 80 °C, 85 °C, 90 °C, or the like, or may definitely be other values within the above range, and is not limited herein.

In some implementations, time for the drying treatment is 6 h-24 h, which may specifically be 6 h, 8 h, 10 h, 12 h, 15 h, 18 h, 20 h, 24 h, or the like, or may definitely be other values within the above range, and is not limited herein.

At S30, stepwise heating treatment is performed on the precursor in the inert gas atmosphere to obtain the carbon material having the rod-shaped structure. The average length-diameter ratio of the particles of the carbon material is 3-15.

In some implementations, the stepwise heating treatment includes: performing heat treatment on the precursor at 300 °C-400 °C for 1 h-3 h, raising the temperature to 600 °C-900 °C for heat treatment for 1 h-6 h, and finally raising the temperature to 950 °C-1100 °C for heat treatment for 3 h-6 h.

Specifically, by performing heat treatment on the precursor at 300 °C-400 °C, initial solidification may be performed on the structure of the rod-shaped precursor to reduce the occurrence of damage to the rod-shaped structure caused by rapid heating, heat treatment is performed at 600 °C-900 °C, carbonization and cracking are performed on the polymer in the precursor to form the rod-shaped carbon material containing zinc oxide, then before raising the temperature to 950 °C-1100 °C, zinc oxide is reduced to elemental zinc by partial carbon in the carbon material, and finally, during the heat treatment stage at 950 °C-1100 °C, gasification and dezincification are performed, and the elemental zinc is released from the interior of the carbon material to form the pores in the carbon material extending from the interior to the surface, thereby forming the carbon material having the rod-shaped structure with a large number of micropores.

In some implementations, a heating rate for the stepwise heating treatment is 1 °C/min-5 °C/min, which may specifically be 1 °C/min, 1.5 °C/min, 2 °C/min, 2.5 °C/min, 3 °C/min, 3.5 °C/min, 4 °C/min, 4.5 °C/min, 5 °C/min, or the like, and is not limited herein.

In some implementations, the inert gas atmosphere includes at least one of helium, nitrogen, or argon.

In some implementations, the method further includes: performing cooling, shaping, and sieving on a product after the stepwise heating treatment. The shaping includes at least one of mechanical crushing, grinding, ball milling, or jet milling.

In a fifth aspect, the present disclosure provides a battery. The battery includes the carbon material as described in the first aspect or the anode material as described in the second aspect or the third aspect, or a carbon material prepared according to the preparation method for the carbon material as described in the fourth aspect.

### Embodiment

### Embodiment 1

(1) 950 mL of ethanol and 400 mL of water were uniformly mixed to form a mixed solvent, and 10 g of resorcinol, 60g of Cetyltrimethylammonium Bromide (CTAB), and 5 mL of ammonia water were sequentially added to the mixed solvent, and stirred at 30 °C for 0.5 h to achieve homogeneity. Then, 15 mL of formaldehyde and 40 mL of a saturated zinc acetate solution at 25 °C (a concentration in a reaction system was 0.0484 mol/L) were added to obtain a mixed solution (pH 12.4) containing resorcinol, formaldehyde, and saturated zinc acetate.
(2) The mixed solution (pH 12.4) was stirred and allowed to react at 30 °C for 24 h, a stirring rate was controlled at 1000 r/min, and suction filtration and separation were performed to obtain a complex containing resorcinol formaldehyde resin and zinc hydroxide.
(3) The complex containing resorcinol formaldehyde resin and zinc hydroxide was vacuum dried at 60 °C for 12 h to form a precursor containing resorcinol formaldehyde resin and zinc oxide.
(4) The precursor containing resorcinol formaldehyde resin and zinc oxide was placed in a carbonization furnace, nitrogen was introduced, a temperature was raised to 350 °C at a rate of 1.5 °C/min for heat treatment for 2 h, then further raised to 600 °C at a rate of 1.5 °C/min for heat treatment for 2 h, and finally raised to 950 °C at a rate of 1.5 °C/min for heat treatment for 4 h, and cooling, grinding, and sieving were performed to obtain a carbon material having a rod-shaped structure.

According to the carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

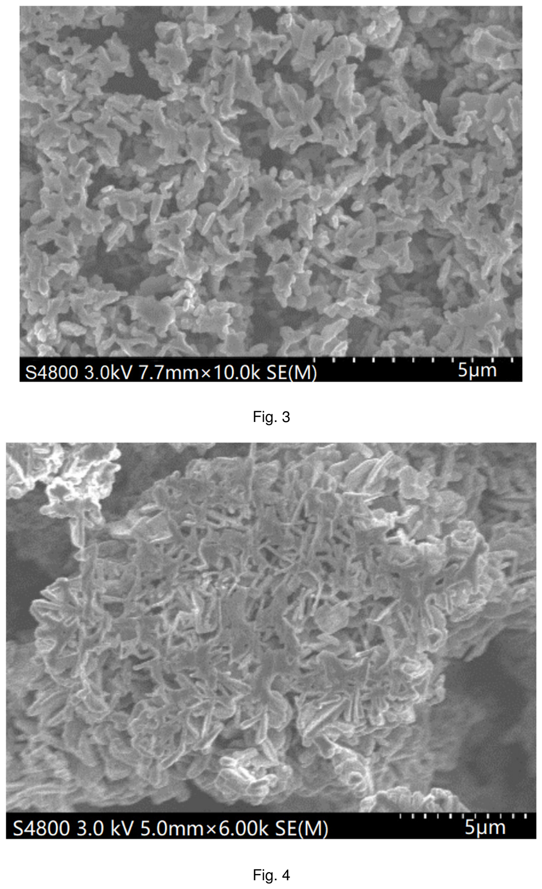

Fig. 3 was a scanning electron micrograph of a carbon material prepared in this embodiment. As shown in Fig. 3, the particles of the carbon material had the rod-shaped structure.

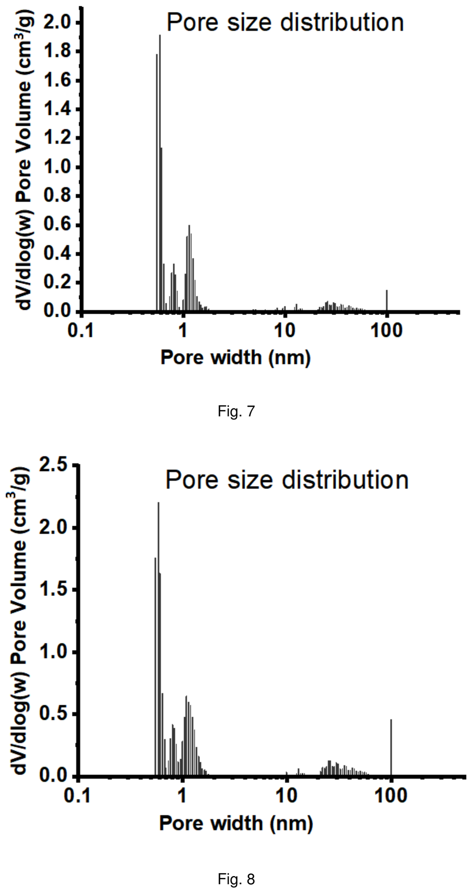

The carbon material was tested using an iPore620 pore size tester from PhysiChem and a Brunauer-Emmett-Teller (BET) pore size distribution test method, and pore size distribution data of the carbon material was obtained by Density Functional Theory (DFT) simulation analysis using an isothermal adsorption characteristic curve of nitrogen. Fig. 7 was a pore size distribution test chart of a carbon material prepared in this embodiment. As shown in Fig. 7, pore structures of the pores in the carbon material included micropores less than 2 nm.

### Embodiment 2

A difference between this embodiment and Embodiment 1 lied in that, in S(1), 80 mL of a saturated zinc acetate solution at 25 °C (a concentration in a reaction system was 0.0969 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

Fig. 4 was a scanning electron micrograph of a carbon material prepared in this embodiment. As shown in Fig. 4, the particles of the carbon material had the rod-shaped structure, and since micropore structures exceeded a resolution of a scanning electron microscope, the micropore structures on the carbon material were difficult to observe.

The carbon material was tested using an IPore620 pore size tester from PhysiChem and a BET pore size distribution test method, and pore size distribution data of the carbon material was obtained by DFT simulation analysis using an isothermal adsorption characteristic curve of nitrogen. Fig. 8 was a pore size distribution diagram of a carbon material prepared in this embodiment. As shown in Fig. 8, pore structures of the pores in the carbon material were mainly micropores less than 2 nm.

### Embodiment 3

A difference between this embodiment and Embodiment 1 lied in that, in S(1), 120 mL of a saturated zinc acetate solution at 25 °C (a concentration in a reaction system was 0.1452 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

### Embodiment 4

A difference between this embodiment and Embodiment 1 lied in that, in S(1), 160 mL of a saturated zinc acetate solution at 25 °C (a concentration in a reaction system was 0.1936 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

### Embodiment 5

A difference between this embodiment and Embodiment 1 lied in that, in S(1), 200 mL of a saturated zinc acetate solution at 25 °C (a concentration in a reaction system was 0.2420 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

### Embodiment 6

A difference between this embodiment and Embodiment 1 lied in that, in S(1), 240 mL of a saturated zinc acetate solution at 25 °C (a concentration in a reaction system was 0.2904 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, a median particle size, and a volume proportion of micropores, mesopores, and macropores in the total pore volume of the carbon material were shown in detail in Table 1.

### Embodiment 7

A difference between this embodiment and Embodiment 1 lied in that, in S(1), 280 mL of a saturated zinc acetate solution at 25 °C (a concentration in a reaction system was 0.3388 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

### Embodiment 8

A difference between this embodiment and Embodiment 1 lied in that, in S(1), 320 mL of a saturated zinc acetate solution at 25 °C (a concentration in a reaction system was 0.3872 mol/L) was added, and the remaining operations were the same as in Embodiment 1.

According to a carbon material prepared in this embodiment, particles of the carbon material had a rod-shaped structure, and the carbon material had pores. An average length, an average diameter, a total pore volume, a specific surface area, an average diameter of the pores, and a volume proportion of micropores, mesopores, and macropores in the total pore volume of the carbon material were shown in detail in Table 1.

### Comparative embodiment 1

A difference between this comparative embodiment and Embodiment 1 lied in that, in S(1), 360 mL of a saturated zinc acetate solution at 25 °C (a concentration in a reaction system was 0.4425 mol/L) was added, and the remaining operations were the same as in Embodiment 1.

### Comparative embodiment 2

(1) 950 mL of ethanol and 400 mL of water were uniformly mixed to form a mixed solvent, and 10 g of resorcinol, 60g of Cetyltrimethylammonium Bromide (CTAB), and 5 mL of ammonia water were sequentially added to the mixed solvent, and stirred at 30 °C for 0.5 h to achieve homogeneity. Then, 15 mL of formaldehyde and 40 mL of tetraethyl orthosilicate were added to obtain a mixed solution (pH 12.6) containing resorcinol, formaldehyde, and tetraethyl orthosilicate.
(2) The mixed solution (pH 12.6) was stirred and allowed to react at 30 °C for 24 h, and suction filtration and separation were performed to obtain a complex containing resorcinol formaldehyde resin and silica.
(3) The complex was vacuum dried at 60 °C for 12 h to form a precursor containing resorcinol formaldehyde resin and silica.
(4) The precursor was placed in a carbonization furnace, nitrogen was introduced, a temperature was raised to 350 °C at a rate of 1.5 °C/min for heat treatment for 2 h, then further raised to 600 °C at a rate of 1.5 °C/min for heat treatment for 2 h, and finally raised to 950 °C at a rate of 1.5 °C/min for heat treatment for 4 h, and cooling, grinding, and sieving were performed to obtain carbonization product powder having a spherical structure.
(5) The carbonization product powder having the spherical structure was placed in hydrofluoric acid for etching treatment, and then sanction filtration, washing and drying treatment were performed to obtain a carbon material having a spherical structure.

### Test Method

### (1) Test method for average length-diameter ratio of carbon material:

The carbon material was photographed by a scanning electron microscope S-4800 from Hitachi, Japanese, and 200 particles of the carbon material were randomly selected from photographed images for measurement to obtain a length and a diameter of each particle. A length-diameter ratio of each particle was calculated by the length and the diameter, and then the average length-diameter ratio of 200 particles was calculated.

### (2) Test method for pore size distribution of pores of carbon material:

The carbon material was tested using the IPore620 pore size tester from PhysiChem and the **BET** pore size distribution test method, the pore size distribution data of the carbon material was obtained by **DFT** simulation analysis using the isothermal adsorption characteristic curve of nitrogen, and then the average pore size, the total pore volume, the **BET** specific surface area, and the volume proportion of the micropores, the mesopores, and the macropores in the total pore volume of the carbon material were obtained.

### (3) Test method for mass content of oxygen in carbon material:

An ONH 2000 oxygen nitrogen hydrogen analyzer from Verder, Germany was used, the carbon material was coated with a fluxing agent and molten in a graphite crucible in an inert atmosphere, oxygen contained in the carbon material was reduced into carbon dioxide by carbon, the produced carbon dioxide entered an infrared detector with a carrier gas, and the content of oxygen was calculated by performing quantitative statistics on changes in a carbon dioxide infrared signal.

### (4) Electrochemical performance test:

The carbon material prepared in Embodiment 1-8 and Comparative embodiments 1-2, conductive carbon black (super P), and a binder (LA133) were mixed into a slurry at a ratio of 91:3:6 and uniformly coated on a copper foil. After drying, the slurry was prepared into electrode sheets, which were assembled into button batteries and tested for the charging capacity and the coulombic efficiency on a battery test cabinet M340A from LAND.

The above test results were shown in detail in Table 1 and Table 2.

**Table 1 Performance parameters of carbon material in Embodiments and Comparative embodiments**

| Sampl e | Avera ge lengt h (µm) | Avera ge diamet er (µm) | Average length-di ameter ratio | Avera ge pore size (nm) | **Specific** surface area (m²/g) | **Total** pore volume (cm³/g) | Volume proportion of microspore s (%) | Volume proportion of mesopores (%) | Volume proportion of macropor es (%) | Mass content of oxygen % |
|---|---|---|---|---|---|---|---|---|---|---|
| Embo diment 1 | 1.02 | 0.20 | 5.1 | 1.78 | 788 | 0.35 | 92.1 | 7.0 | 0.9 | 1.1 |
| Embo diment 2 | 2.16 | 0.21 | 10.3 | 1.86 | 917 | 0.42 | 89.9 | 8.3 | 1.8 | 1.5 |
| Embo diment 3 | 2.51 | 0.22 | 11.4 | 1.98 | 1042 | 0.52 | 89.5 | 8.6 | 1.9 | 2.1 |
| Embo diment 4 | 2.82 | 0.22 | 12.8 | 2.13 | 1156 | 0.64 | 87.6 | 10.3 | 2.1 | 3.1 |
| Embo diment 5 | 3.13 | 0.23 | 13.6 | 2.25 | 1273 | 0.75 | 85.2 | 12.6 | 2.1 | 3.8 |
| Embo diment 6 | 3.53 | 0.24 | 14.7 | 2.37 | 1392 | 0.79 | 83.8 | 13.6 | 2.6 | 4.3 |
| Embo diment 7 | 2.09 | 0.38 | 5.5 | 1.94 | 1543 | 0.80 | 82.8 | 14.6 | 2.6 | 5.5 |
| Embo diment 8 | 1.67 | 0.52 | 3.2 | 1.01 | 863 | 0.53 | 83.6 | 14.8 | 1.6 | 4.2 |
| Comp arative embod iment 1 | 1.51 | 1.26 | 1.2 | 1.01 | 572 | 0.28 | 85.9 | 14.1 | 0 | 5.9 |
| Comp arative embod iment 2 | 1.21 | 1.21 | 1.0 | 2.19 | 1051 | 0.69 | 59.7 | 39.7 | 0.6 | 2.8 |

**Table 2 Electrochemical performance test results of carbon material prepared in Embodiments and Comparative embodiments**

| Sample | Charging capacity mAh/g | Coulombic efficiency % |
|---|---|---|
| Embodiment 1 | 262 | 52 |
| Embodiment 2 | 303 | 50 |
| Embodiment 3 | 338 | 49 |
| Embodiment 4 | 352 | 47 |
| Embodiment 5 | 374 | 45 |
| Embodiment 6 | 381 | 44 |
| Embodiment 7 | 388 | 42 |
| Embodiment 8 | 341 | 46 |
| Comparative embodiment 1 | 186 | 41 |
| Comparative embodiment 2 | 295 | 20 |

As shown in Table 1, during the preparation of the carbon material prepared in Embodiments 1-8 and Comparative embodiment 1, as the concentration of zinc acetate in the reaction system continuously increased, the longitudinal growth of the generated rod-shaped zinc oxide template became dominant, and the length-diameter ratio of the synthesized rod-shaped carbon material continuously increased. However, in Embodiment 7, Embodiment 8, and Comparative embodiment 1, the longitudinal growth of the rod-shaped zinc oxide began to be suppressed by the shear force generated during stirring as the concentration of zinc acetate in the reaction system excessively increased, the lateral growth became dominant, and the length-diameter ratio begun to decrease continuously. When the amount of saturated zinc acetate reached 360 mL in Comparative embodiment 1, particle agglomerated and the rod-shaped structure disappeared. During this process, as the concentration of zinc acetate in the reaction system continuously increased, more pores were formed in the carbon material, resulting in an increase in the total pore volume. However, the increase in the concentration of zinc acetate in the reaction system also intensified the pore-forming effect, resulting in the collapse and merging of some micropores in the carbon material. As a result, the proportion of the micropores decreased while the average pore size of the carbon material increased. As the concentration of zinc acetate in the reaction system excessively increased, the distribution of zinc in the carbon material was non-uniform, partial zinc agglomerated, and the pore-forming capability was weakened, so that the total pore volume of the carbon material began to decrease, the proportion of the micropores increased, and the average pore size of the carbon material also began to decrease. Therefore, the average pore size, the specific surface area, the total pore volume, and the volume proportion of the macropores of the rod-shaped carbon material formed in Embodiments 1-8 and Comparative embodiment 1 showed a trend of gradually increasing first and then gradually decreasing, while the proportion of the micropores showed an opposite trend of gradually decreasing first and then gradually increasing.

As can be seen from Table 1 and Table 2, during the preparation of the carbon material prepared in Embodiments 1-8, as the concentration of zinc acetate in the reaction system increased, zinc acetate was thermally decomposed to produce zinc oxide, the zinc oxide was reduced by the carbon material, and oxygen was transferred to the carbon material, so that the mass content of oxygen and zinc content in the carbon material both increased, the pore-forming effect of zinc increased, more pores were formed in the carbon material, the total pore volume increased, and the lithium intercalation capacity of the carbon material was enhanced, thereby improving the charging capacity. A small amount of oxygen doped in the carbon material also provided lone pairs of electrons, and these electrons interacted with π electrons in the carbon material to form a conjugated system, thereby improving the conductivity of the carbon material.

According to the test data of Embodiment 7 and Embodiment 1, it might be learned that, the concentration of zinc acetate in the reaction system was relatively high, so that the mass content of oxygen in the carbon material increased, thereby improving the charging capacity. However, the too high oxygen content disrupted the continuity of a C=C conjugated system in the carbon material, resulting in the fracture of the C=C conjugated system and a decrease in conductivity. After the carbon material was applied to the anode material, the amount of active lithium ions consumed during the cycling of the anode material increased, resulting in a decrease in the initial coulombic efficiency of the carbon material compared to Embodiment 1. Therefore, considering the initial coulombic efficiency and charging capacity of the carbon material, the mass content of oxygen in the carbon material was preferably 1% to 4.2 %.

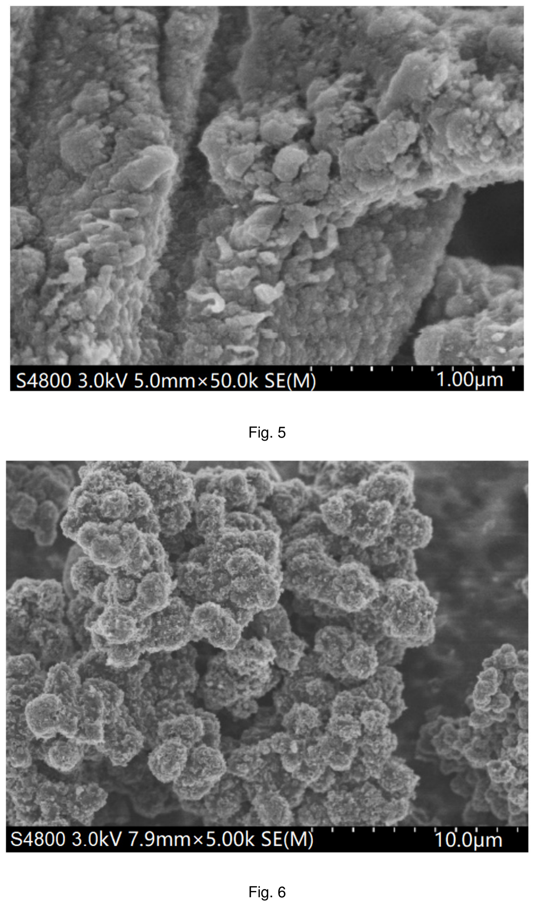

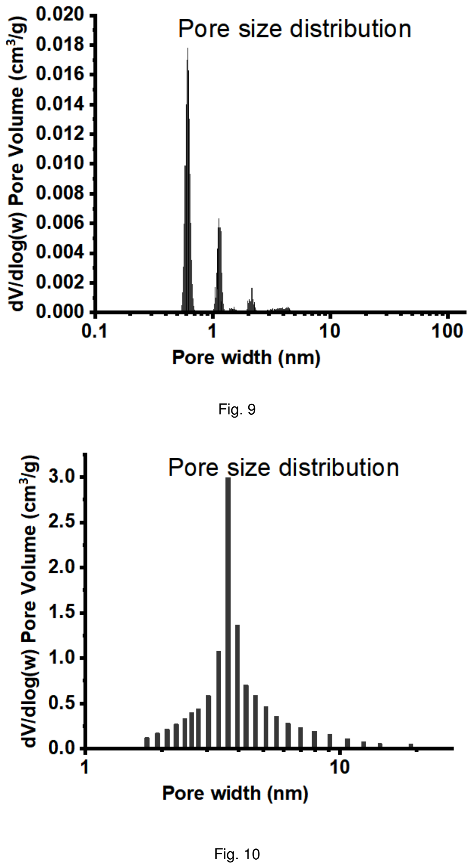

Fig. 5 was a scanning electron micrograph of a carbon material according to Comparative embodiment 1 of the present disclosure. As shown in Fig. 5, the particles in the carbon material formed agglomeration and the rod-shaped structure disappeared. Fig. 9 was a pore size distribution diagram of a carbon material according to Comparative embodiment 1 of the present disclosure. As shown in Fig. 9, the pores in the carbon material were only micropores and mesopores, and there were no macropores.

During the preparation of the carbon material prepared in Comparative embodiment 1, since the concentration of zinc acetate in the reaction system was too high, the longitudinal growth of the rod-shaped zinc oxide began to be suppressed by the shear force generated during stirring, the lateral growth of zinc oxide became dominant, the length-diameter ratio decreased, and the particles began to agglomerate, resulting in the disappearance of the rod-shaped structure, thereby failing to form the rod-shaped carbon material.

According to the test data of Embodiment 1 and Comparative embodiment 1, it might be learned that, in Comparative embodiment 1, since the concentration of zinc acetate in the reaction system was too high, and during the stepwise heating treatment, the carbon material was oxidized and etched by zinc oxide, the zinc oxide was reduced by the carbon material, and oxygen was transferred to the carbon material, so that the mass content of oxygen and the mass content of zinc element in the carbon material were too high, and the increase in the mass content of oxygen in the carbon material disrupted the continuity of the C=C conjugated system in the material, resulting in the fracture of the C=C conjugated system, and significantly reducing the conductivity of the carbon material. At the same time, the too high zinc content in the carbon material caused non-uniform distribution of zinc in the carbon material, partial zinc agglomerated, and the pore-forming capability was weakened, resulting in a decrease in the total pore volume of the carbon material. After the carbon material was applied to the anode material, the lithium intercalation capacity of the anode material decreased, and the capacity and the coulombic efficiency of the carbon material decreased. At the same time, the proportion of the mesopores in the carbon material also increased significantly, resulting in a decrease in the structural stability of the carbon material, and during the roller-pressing of the electrode sheet, the particles were easily broken, and a side reaction between the carbon material and an electrolyte intensified, causing the continuous formation of an SEI interface film, and further reducing the capacity and the coulombic efficiency of the carbon material.

Fig. 6 was a scanning electron microscope diagram of a carbon material according to Comparative embodiment 2 of the present disclosure. As shown in Fig. 6, the particles in the carbon material agglomerated to form a spherical carbon material. Fig. 10 was a pore size distribution diagram of a carbon material according to Comparative embodiment 2 of the present disclosure. As shown in Fig. 10, the proportion of the mesopores and the macropores in the carbon material increased significantly.

According to the test data of Embodiment 3, Embodiment 4, and Comparative embodiment 2, it might be learned that, the carbon material prepared in Comparative embodiment 2 had similar average pore size, specific surface area, and total pore volume to those prepared in Embodiment 3 and Embodiment 4. However, since the inorganic zinc salt was replaced with tetraethyl orthosilicate during the preparation of the carbon material in Comparative embodiment 2, the generated carbon material was spherical porous carbon. The proportion of the mesopores and the macropores in the carbon material was higher, the micropores were fewer, the gaps among the particles of the carbon material were large, and the mechanical properties were weakened, resulting in the breakage of some particles of the spherical porous carbon during the roller-pressing of the electrode sheet, so that the specific surface area of the carbon material increased, the side reaction between the carbon material and the electrolyte was intensified, and the SEI film was further thickened, thereby resulting in capacity fading of the carbon material and a significant reduction in the coulombic efficiency.

The applicant declared that the present disclosure illustrated the detailed process devices and process flows of the present disclosure by the above embodiments, but the present disclosure was not limited to the above detailed process devices and process flows, i.e., it did not mean that the present disclosure had to rely on the above detailed process devices and process flows in order to be implemented. It should be clear to those skilled in the art that any improvements to the present disclosure, the equivalent substitution of raw materials of a product of the present disclosure and the addition of auxiliary ingredients, the selection of specific methods, etc., fallen within the scope of protection and disclosure of the present disclosure.

## Claims

1. A carbon material, wherein the carbon material has pores, and an average length-diameter ratio of particles of the carbon material is 3-15.

2. The carbon material according to claim 1, wherein the carbon material meets at least one of the following technical features:
(1) an average length of the particles of the carbon material is 0.3 µm-5 µm;
(2) an average diameter of the particles of the carbon material is 0.1 µm-3 µm.

3. The carbon material according to claim 1, wherein a total pore volume of the carbon material is 0.2 cm³/g-0.8 cm³/g.

4. The carbon material according to claim 1, wherein an average pore size of the pores in the carbon material is 0.8 nm-2.5 nm.

5. The carbon material according to claim 1, wherein the pores in the carbon material comprise micropores, wherein a volume proportion of the micropores in a total pore volume is 80%-95%.

6. The carbon material according to claim 1, wherein the pores in the carbon material further comprise at least one of mesopores or macropores.

7. The carbon material according to claim 6, wherein the carbon material meets at least one of the following technical features:
(1) a volume proportion of the mesopores in a total pore volume is 5%-15%;
(2) a volume proportion of the macropores in the total pore volume is 0%-5%.

8. The carbon material according to claim 1, wherein the carbon material meets at least one of the following technical features:
(1) a charging capacity of a battery assembled from the carbon material is 250 mAh/g-400 mAh/g;
(2) coulombic efficiency of the battery assembled from the carbon material is 40%-55%.

9. The carbon material according to claim 1, wherein a mass content of oxygen in the carbon material is 1%-5.5%.

10. An anode material, comprising the carbon material according to any one of claims 1 to 9 and an active substance, wherein at least partial active substance is filled in pores of the carbon material.

11. An anode material, comprising a carbon material and an active substance, wherein the anode material with the active substance removed has pores, and a length-diameter ratio of particles of the anode material with the active substance removed is 3-15.

12. The anode material according to claim 10 or 11, wherein a mass content of carbon in the anode material is 70%-98%.

13. The anode material according to claim 10 or 11, wherein the anode material meets at least one of the following technical features:
(1) the active substance comprises silicon-based active particles;
(2) the active substance comprises silicon-based active particles, wherein the silicon-based active particles comprise at least one of amorphous silicon, crystalline silicon, silicon oxide, silicon alloy, or a complex of crystalline silicon and amorphous silicon;
(3) the active substance comprises silicon-based active particles, wherein an average particle size of the silicon-based active particles is 0.85 nm-2.45 nm.

14. The anode material according to claim 10 or 11, wherein a pore volume of the anode material is 0.001 cm³/g-0.020 cm³/g.

15. A battery, comprising the carbon material according to any one of claims 1 to 9 or the anode material according to any one of claims 10 to 14.
